# EUROPÄISCHE PATENTANMELDUNG

(11) **EP 4 675 757 A1**
(43) Veröffentlichungstag der Anmeldung: **07.01.2026**
(21) Anmeldenummer: 24186258.0
(22) Anmeldetag: 03.07.2024
(51) Int. Cl.: H01M 10/613, H01M 10/653, H01M 10/655, H01M 10/658, H01M 10/659, H01M 50/14, H01M 50/169, H01M 50/183, H01M 50/308, H01M 50/342

(54) **THERMISCHE SCHUTZANORDNUNG FÜR EIN ZELLGEHÄUSE UND BATTERIEZELLE**

(71) Anmelder: Cellforce Group GmbH, 72138 Kirchentellinsfurt (DE)
(72) Erfinder: Gräf, Jürgen, 72072 Tübingen (DE)
(74) Vertreter: Müller Schupfner & Partner Patent- und Rechtsanwaltspartnerschaft mbB (Muc)

(57) **Zusammenfassung**

Die Erfindung betrifft eine Anordnung zur thermischen Verstärkung eines Zellgehäuses einer Batteriezelle, aufweisend ein Zellgehäuse mit einem Innenvolumen und aufweisend mindestens einen Elektrodenstapel, welcher in dem Innenvolumen des Zellgehäuses angeordnet ist, wobei das Zellgehäuse zumindest bereichsweise thermisch verstärkt und/oder zumindest bereichsweise gegenüber dem Elektrodenstapel isoliert ausgeführt ist. Des Weiteren betrifft die Erfindung eine Batteriezelle mit einer Anordnung.

## Beschreibung

Die Erfindung betrifft eine Anordnung zur thermischen Verstärkung eines Zellgehäuses einer Batteriezelle, aufweisend ein Zellgehäuse mit einem Innenvolumen und aufweisend mindestens einen Elektrodenstapel, welcher in dem Innenvolumen des Zellgehäuses angeordnet ist. Des Weiteren betrifft die Erfindung eine Batteriezelle mit einer derartigen Anordnung.

Für die Speicherung und Bereitstellung von elektrischer Energie werden üblicherweise Batteriezellen gemäß dem elektrochemischem Prinzip eingesetzt. Insbesondere im Fahrzeugbereich werden regulär Lithium-lonen-Batteriezellen verwendet. Aus Gewichts- und Kostengründen weisen die Batteriezellen aus Aluminium hergestellte Zellgehäuse auf. Innerhalb des Zellgehäuses ist ein Elektrodenstapel bzw. ein Elektrodenwickel angeordnet, welcher aus Anodenfolien, Kathodenfolien und Separatoren besteht. Darüber hinaus ist regulär ein Elektrolyt im Innenvolumen des Zellgehäuses vorgesehen.

Bei einer Überladung oder einem Kurzschluss kann eine Batteriezelle exotherm reagieren (sogenanntes thermisches Durchgehen bzw. Thermal Runaway). Bei dieser Reaktion entstehen neben der Hitze durch die chemische Reaktion auch Gase, die aus der Batteriezelle abgeführt werden müssen, um Explosionen zu verhindern. Hierfür sind Berstmembranen vorgesehen, welche beispielsweise außenseitig mit einem Zelldeckel des Zellgehäuses einer Batteriezelle verbunden werden. Eine Berstmembran kann bei Überschreiten eines vordefinierten Drucks im Innenvolumen des Zellgehäuses öffnen und eine Verbindung zu einer externen Umgebung herstellen. Es sind bereits Berstmembranen in Form von Überdruckventilen, gezielten Schwächungen in Zellgehäusen oder gezielten Schwächungen in mit dem Zellgehäuse verbundenen Platten bekannt.

Problematisch ist allerdings die hohe Temperatur der resultierenden Gase im Fall eines thermischen Durchgehens, die bei einer Zellchemie mit hoher spezifischer Energiedichte bei über 1.000°C liegen kann. Derartig hohe Temperaturen können in einem bereichsweisen oder vollständigen Zerstören des Zellgehäuses resultieren und somit auch die mechanische Stabilität der Batteriezelle beeinträchtigen.

Die vorliegende Erfindung hat daher die Aufgabe, eine Anordnung und eine Batteriezelle zu schaffen, die bei einem thermischen Durchgehen die mechanische Stabilität der Batteriezelle verbessern kann. Diese Aufgabe wird durch die im Anspruch 1 angegebenen Merkmale gelöst. Weitere vorteilhafte Ausgestaltungen der Erfindung sind Bestandteil der Unteransprüche und der Beschreibung.

Gemäß einem Aspekt der Erfindung wird eine Anordnung zur thermischen Verstärkung eines Zellgehäuses einer Batteriezelle bereitgestellt. Die Anordnung weist ein Zellgehäuse mit einem Innenvolumen und mindestens einen Elektrodenstapel auf. Der Elektrodenstapel kann je nach Ausgestaltung auch als ein Elektrodenwickel ausgeführt sein und mehrere Anodenfolien, Kathodenfolien und Separatorfolien umfassen.

Der Elektrodenstapel ist in dem Innenvolumen des Zellgehäuses angeordnet und kann auch einen festen oder flüssigen Elektrolyten umfassen. Das Zellgehäuse ist erfindungsgemäß zumindest bereichsweise thermisch verstärkt und/oder ist zumindest bereichsweise gegenüber dem Elektrodenstapel, insbesondere thermisch, isoliert ausgeführt.

Die thermische Isolierung und/oder thermische Verstärkung des Zellgehäuses und/oder die thermische Isolierung des Zellgehäuses gegenüber dem Elektrodenstapel kann als eine dauerhafte Verstärkung bzw. Isolierung oder als eine temporäre Verstärkung bzw. Isolierung ausgeführt sein, bei welcher die entsprechende isolierende Wirkung und/oder verstärkende Wirkung im Falle eines thermischen Durchgehens aktiviert werden kann oder durch die Einwirkung von Wärme zunehmend nachlassen kann.

Gemäß einem weiteren Aspekt der Erfindung wird eine Batteriezelle bereitgestellt, welche die erfindungsgemäße Anordnung aufweist. Die Batteriezelle kann einen oder mehrere Elektrodenstapel bzw. Elektrodenwickel aufweisen, die aus Anodenfolien bzw. -lagen, Kathodenfolien bzw. -lagen und Separatorfolien bzw. -lagen bestehen. Der Elektrodenstapel ist im Innenvolumen des Zellgehäuses angeordnet, welches mindestens eine Berstmembran aufweisen kann. Das Zellgehäuse kann durch mindestens einen Zelldeckel verschlossen sein, welcher einen oder mehrere Terminals umfasst, die die jeweiligen Anodenfolien und Kathodenfolien elektrisch verbinden.

Durch die erfindungsgemäße Anordnung kann eine thermisch wirksame Verstärkung des Zellgehäuses realisiert werden, welche beispielsweise vollflächig bzw. für das gesamte Zellgehäuse umgesetzt ist. Dabei kann die thermisch wirksame Verstärkung in gleicher Materialstärke oder temperaturabhängig in variabler Materialstärke ausgestaltet sein.

Alternativ oder zusätzlich kann eine thermisch wirksame Verstärkung des Zellgehäuses erfolgen, welche partiell umgesetzt ist. Beispielsweise kann eine derartige Verstärkung nur im Bereich der Berstmembran oder im Bereich einer relativ dünnen Wandung eines Zellgehäusemantels vorgesehen sein.

Das Zellgehäuse kann somit vollflächig oder partiell mit höherschmelzendem Material verstärkt werden.

Das Zellgehäuse wird vorzugsweise durch einen Zellgehäusemantel und mindestens einen Zelldeckel gebildet. Je nach Ausgestaltung kann der Zellgehäusemantel zwei Öffnungen aufweisen, welche durch zwei Zelldeckel verschlossen werden können. Der Zellgehäusemantel weist mehrere Wandungen auf.

Je nach Ausgestaltung kann der mindestens eine Zelldeckel als eine Wandung des Zellgehäuses dienen und somit ebenfalls thermisch verstärkt und/oder isoliert werden.

Die thermische Verstärkung oder thermische Isolierung des Zellgehäuses gegenüber mindestens einem Elektrodenstapel kann mit einer konstanten Dicke bzw. Stärke oder mit einer variablen Dicke bzw. Stärke umgesetzt sein. Beispielsweise kann die entsprechende Dicke der Verstärkung und/oder Isolierung in temperaturabhängig variabler Dicke ausgeführt sein. Bei einem thermischen Durchgehen thermisch stärker beanspruchte Bereiche des Zellgehäuses können vorzugsweise eine größere Schichtstärke bzw. Dicke aufweisen als Bereich des Zellgehäuses mit einer geringeren thermischen Beanspruchung. Derartige Bereiche des Zellgehäuses und deren thermische Beanspruchung kann mit Hilfe von experimentellen Versuchen oder CFD-Simulationen technisch einfach ermittelt werden. Beispielsweise kann ein der Berstmembran benachbarter Bereich als ein thermisch stärker beanspruchter Bereich definiert sein.

Alternativ oder zusätzlich kann durch die Anordnung eine vollflächige oder partielle Abschirmung oder Isolierung des Zellgehäuses vor Hitzeeinwirkung erzielt werden. Somit kann eine aus Aluminium oder einem anderen Material hergestellte Wandung des Zellgehäuses gegenüber einer Überhitzung mit resultierendem Schmelzen geschützt werden.

Das Schmelzverhalten der Wandung des Zellgehäuses kann zumindest bereichsweise optimiert bzw. ein Schmelzen verzögert oder verhindert werden, wenn das Zellgehäuse durch ein zumindest bereichsweise stoffschlüssig aufgebrachtes Material thermisch verstärkt ist. Bevorzugterweise ist das Material innenseitig und/oder außenseitig angeordnet. Innenseitig oder außenseitig bezieht sich beispielsweise auf ein Innenvolumen, welches durch das Zellgehäuse verschlossen ist. Beispielsweise kann als Material ein oder mehrere höherschmelzende Metalle, wie beispielsweise Edelstahl, Nickel, Stahl und dergleichen, innenseitig bzw. innerhalb des Innenvolumens oder außenseitig bzw. außerhalb des Innenvolumens des Zellgehäuses eingesetzt werden, um die thermische und mechanische Stabilität des Zellgehäuses zu verbessern. Durch diese Maßnahme kann ein Freilegen eines Zellinhalts im Innenvolumen des Zellgehäuses durch ein Schmelzen der Wandung des Zellgehäuses verhindert oder zumindest verzögert werden.

Das Material kann stoffschlüssig bereichsweise oder vollflächig mit dem Zellgehäuse verbunden werden. Eine vollflächige Verbindung des Materials mit dem Zellgehäuse kann beispielsweise durch Plattieren umgesetzt werden. Dabei kann das gesamte Zellgehäuse beispielsweise aus einem durch Edelstahl plattierten Aluminium bestehen.

Die Plattierung bzw. die plattierten Bereiche des Zellgehäuses können vor einem Herstellen des Zellgehäuses, beispielsweise auf einem vorbereiteten oder abgelängtem Blech, aufgebracht werden. Je nach Ausgestaltung kann auch ein vollständig plattiertes Blech für die Herstellung des Zellgehäuses verwendet werden. Ein derartiges Blech kann auf Maß geschnitten, gefaltet und anschließend als eine oder mehrere Wandungen des Zellgehäuses verwendet werden, um ein zumindest bereichsweise geöffnetes Innenvolumen auszubilden.

Dabei kann das Zellgehäuse aus einem Zellgehäusemantel und mindestens einem Zelldeckel bestehen. Der Zellgehäusemantel kann eine oder mehrere Öffnungen aufweisen, in welche der Zelldeckel einsetzbar ist.

Das Verbinden von den Zellwandungen und/oder des Zellgehäusemantels mit dem Zelldeckel kann durch Bördeln, Kleben, Löten, Schweißen und dergleichen umgesetzt werden. Das Zellgehäuse bzw. das Innenvolumen des Zellgehäuses kann durch eine oder mehrere Zelldeckel verschlossen werden.

Die beschriebene Plattierung kann mit einem gegenüber Aluminium höherschmelzendem Metall, wie beispielsweise Stahl, Edelstahl, Nickel und dergleichen erfolgen, die wegen der sonst möglichen Elektrokorrosion vorzugsweise außen bzw. außerhalb des Innenvolumens anbringbar sind.

Bei einer weiteren Ausführungsform ist das Verstärkungselement in Form eines Verstärkungseinsatzes ausgeführt, welcher in einer Berstöffnung angeordnet ist und/oder eine Berstöffnung randseitig begrenzt. Dabei kann das Verstärkungselement zumindest bereichsweise in die Berstöffnung hineinragen und somit eine Wandung der Berstöffnung schützen. Je nach Ausgestaltung kann das Verstärkungselement eine der Berstöffnung korrespondierende Öffnung aufweisen, die in montiertem Zustand übereinander positioniert sind. Somit kann die die Berstöffnung umgebende Wandung durch das Verstärkungselement verstärkt bzw. verdickt werden.

Entsprechend einer weiteren Ausführungsform ist das Zellgehäuse durch eine zumindest bereichsweise Verdickung mindestens einer Wandung thermisch verstärkt. Diese Maßnahme ermöglicht eine technisch einfache Verstärkung des Zellgehäuses.

Gemäß einem Ausführungsbeispiel ist das Zellgehäuse durch eine zumindest bereichsweise aufgebrachte Beschichtung thermisch verstärkt. Die Beschichtung ist gemäß einer Ausführungsform innenseitig und/oder außenseitig auf zumindest einer Wandung des Zellgehäuses aufgebracht. Die Beschichtung kann beispielsweise in Form einer Keramik oder eines höherschmelzenden Metalls ausgestaltet sein.

Ein höherschmelzendes Metall kann beispielsweise jedes Metall oder jede Metalllegierung sein, welche einen gegenüber Aluminium höheren Schmelzpunkt aufweist. Beispielsweise kann die

Beschichtung durch Stahl, Edelstahl, Nickel und dergleichen erfolgen. Als mögliche keramische Beschichtungen können beispielsweise Al₂O₃, Si₃N₄ und dergleichen eingesetzt werden.

Das Zellgehäuse kann besonders effizient gegenüber einer Temperaturänderung des Elektrodenstapels abgeschirmt werden, wenn das Zellgehäuse durch mindestens ein innenseitig und/oder außenseitig angeordnetes Verstärkungselement thermisch verstärkt ist. Ein innenseitig angeordnetes Verstärkungselement kann beispielsweise ein Einlegeelement sein, welches als ein Blech, eine Leiste, ein Formteil und dergleichen ausgebildet ist.

Das Verstärkungselement kann beispielsweise durch eine stoffschlüssige Verbindung, eine kraftschlüssige Verbindung, eine formschlüssige Verbindung, eine lokale Aufdickung bzw. Verdickung des Zellgehäuses und dergleichen am Zellgehäuse und/oder am Elektrodenstapel befestigt sein.

Bei einer außenseitigen Anordnung des Verstärkungselements kann dieses ebenfalls durch eine stoffschlüssige Verbindung, eine kraftschlüssige Verbindung, eine formschlüssige Verbindung, eine lokale Aufdickung des Zellgehäuses und dergleichen am Zellgehäuse befestigt sein.

Die Fixierung des Verstärkungselements kann durch einen Stoffschluss, beispielsweise in Form einer flächigen Schweißung, erfolgen, um ein Unterwandern desselben durch heißes Gas während eines thermischen Durchgehens zu vermeiden. Alternativ oder zusätzlich kann das Verstärkungselement durch Kraftschluss oder Formschluss fixiert werden. Dies kann beispielsweise durch Verklemmung, Crimpung, Clinchung, Nietung und dergleichen realisiert sein.

Aufgrund der Möglichkeit, das Verstärkungselement ohne eine stoffschlüssige Verbindung am Zellgehäuse zu befestigen, kann dieses aus thermisch besonders resistenten und üblicherweise nicht schweißbaren Materialien, wie beispielsweise Keramik, Kohlenstoff und dergleichen bestehen. Dabei kann das Verstärkungselement als Vollmaterial oder als eine Fasermatte oder als ein Filz bzw. Vlies ausgebildet sein.

Bei einer weiteren Ausführungsform ist das Verstärkungselement durch eine Berstmembran an dem Zellgehäuse fixiert. Die Berstmembran kann direkt oder indirekt mit dem Zellgehäuse verbunden sein und als Verbindungselement zwischen dem Gehäuse und dem Verstärkungselement fungieren.. Diese Maßnahme ermöglicht eine indirekte Fixierung des Verstärkungselements am Zellgehäuse durch die Berstmembran. Hierdurch können weitere Komponenten für die Fixierung des Verstärkungselements entfallen, wodurch die Bauteilvielfalt effektiv reduziert werden kann.

Nach einer weiteren Ausführungsform ist zwischen mindestens einer Wandung des Zellgehäuses und dem mindestens einen Elektrodenstapel mindestens eine thermisch isolierende Platte angeordnet. Bevorzugterweise ist das Zellgehäuse zumindest bereichsweise durch die thermisch isolierende Platte gegenüber dem Elektrodenstapel isoliert. Durch diese Maßnahme kann eine thermisch beständige Platte als Hitzeschild zwischen dem Elektrodenstapel und der Wandung des Zellgehäuses positioniert werden, um eine gezielte Schutzwirkung gegenüber thermischer Einwirkung zu erzielen. Eine derartige Platte kann beispielsweise aus einem thermisch isolierenden Material, wie beispielsweise Keramik oder Kohlenstoff, und/oder aus einem Material mit einem gegenüber Aluminium höheren Schmelzpunkt bestehen.

Ein Ablösen von Fasern oder Partikel vom Elektrodenstapel während eines thermischen Durchgehens einer Batteriezelle kann besonders effizient unterbunden werden, wenn der mindestens eine im Innenvolumen des Zellgehäuses angeordnete Elektrodenstapel zumindest bereichsweise durch eine thermisch isolierende Matte umhüllt ist. Eine derartige Matte kann vorteilhafterweise gasdurchlässig sein. Hierdurch ist das Zellgehäuse zumindest bereichsweise durch die thermisch isolierende Matte gegenüber dem Elektrodenstapel isoliert. Diese Maßnahme ermöglicht weiterhin die thermische Isolierung des Elektrodenstapels, welcher während eines thermischen Durchgehens als Wärmequelle dient, gegenüber dem Zellgehäuse.

Gemäß einem weiteren Ausführungsbeispiel ist die thermisch isolierende Matte als eine Keramikfasermatte ausgestaltet. Eine derartige Matte kann beispielsweise eine mit einem Thermoplast, wie beispielsweise Polypropylen, getränkte Keramikfasermatte oder ein Keramik-Vlies sein. Beispielsweise kann als Material für die Keramik Al₂O₃, Si₃N₄ eingesetzt werden.

Die isolierende Matte kann eine zusätzliche Funktion als ein Filter übernehmen, wenn das Zellgehäuse mindestens eine Berstmembran aufweist und die thermisch isolierende Matte zwischen der Berstmembran und dem mindestens einen Elektrodenstapel angeordnet ist. Diese Maßnahme ermöglicht die Verwendung der Materialeigenschaften der isolierenden Matte als Partikelfilter, sodass lediglich gasförmige Bestandteile aus dem Zellgehäuse hinausgeleitet werden können.

Nach einer weiteren Ausführungsform ist zwischen mindestens einer Wandung des Zellgehäuses und zwischen mindestens einem Elektrodenstapel mindestens ein thermisch wirksames Element angeordnet. Bevorzugterweise ist das thermisch wirksame Element dazu eingerichtet, bei Wärmeeinwirkung eine Wärmemenge durch Schmelzenthalpie und/oder Verdampfungsenthalpie aufzunehmen und/oder einen isolierenden Spalt zwischen dem Elektrodenstapel und dem Zellgehäuse auszubilden. Durch diese Maßnahme kann das thermisch wirksame Element selbst reflektierend und/oder isolierend wirken und dadurch bestimmte Bereiche der Wandung des Zellgehäuses oder das gesamte Zellgehäuse vor einer thermischen Überbeanspruchung mit anschließendem Schmelzen schützen. Der Schutz vor thermischer Überbeanspruchung kann auch dahingehend verstanden werden, dass ein Schmelzen des Zellgehäuses verzögert wird und/oder auf bestimmte Bereiche begrenzt wird oder ein Schmelzen auch im Falle eines thermischen Durchgehens der Batteriezelle unterbunden wird.

Das thermisch wirksame Element kann auch derart wirken, dass ein gefüllter oder ungefüllter Spalt durch ein Schmelzen oder eine Sublimierung bzw. Verdampfung bei einem thermischen Durchgehen der Batteriezelle gebildet wird. Ein Material des thermisch wirksamen Elements, welches einen gasförmigen und/oder flüssigen Aggregatzustand unter Hitzeeinwirkung eingenommen hat, kann dabei als ein isolierendes Medium wirken.

Alternativ oder zusätzlich kann das flüssige oder gasförmige Material des thermisch wirksamen Elements aus dem Innenvolumen des Zellgehäuses entweichen und einen Luftspalt hinterlassen, welcher isolierend zwischen dem thermisch aktiven Elektrodenstapel und einer Wandung des Zellgehäuses angeordnet ist.

Das thermisch wirksame Element kann alternativ oder zusätzlich dazu eingerichtet sein, durch Ablationskühlung die bei einem thermischen Durchgehen der Batteriezelle entstehende Wärme zumindest teilweise aufzunehmen und somit eine kühlende Wirkung gegenüber der Wandung des Zellgehäuses auszubilden. Hierfür kann das thermisch wirksame Element ein pyrolysierendes oder sublimierendes Material, wie beispielsweise Kunstharze, aufweisen.

Bei einer weiteren Ausgestaltung kann das thermisch wirksame Element als kapazitive Kühlung fungieren und somit einen Teil der entstehenden Wärme, beispielsweise aufgrund eines thermisch durchgehenden Elektrodenstapels, aufnehmen. Einen entsprechenden Effekt kann auch das Zellgehäuse aufweisen, welches bereichsweise verdickt ist oder ein innenseitig und/oder außenseitig angeordnetes Verstärkungselement aufweist, welches Wärme aufnehmen kann. Eine kapazitive Kühlung kann auch durch ein Phasenwechselmaterial bzw. ein sogenanntes PCM umgesetzt werden, welches innerhalb eines Temperaturbereichs besonders viel Wärme durch eine Phasenumwandlung aufnehmen kann.

Je nach Ausgestaltung kann ein thermischer Schutz des Zellgehäuses durch eine konduktive Kühlung realisiert werden. Hierfür kann eine zumindest bereichsweise thermische Anbindung des Zellgehäuses an ein Kühlmittel erfolgen. Die thermische Anbindung kann direkt erfolgen, sodass das Zellgehäuse außenseitig direkt von einem Kühlmittel umströmt wird. Alternativ oder zusätzlich kann die thermische Anbindung indirekt erfolgen, sodass Kühlplatten oder Kühlkanäle eingesetzt werden, die die Wärme von der Wandung des Zellgehäuses abführen.

Die genannten Maßnahmen zur thermischen Stabilisierung und zum thermischen Schutz des Zellgehäuses können individuell bzw. separat als auch in beliebiger Kombination miteinander eingesetzt werden. Somit kann eine thermische Verstärkung und/oder eine thermische Abschirmung und/oder eine Kühlung des Zellgehäuses genutzt werden. Darüber hinaus können die genannten Maßnahmen im Sinne einer Funktionsintegration auch weitere Aufgaben übernehmen, wie eine zusätzliche mechanische Verstärkung oder die Verhinderung des Austritts von Partikeln. Eine Keramikfasermatte, beispielsweise als Al₂0₃ kann als ein Filter vor der Berstmembran fungieren und somit im Falle des thermischen Durchgehens nur das reine Gas durchlassen. Darüber hinaus sind die genannten Maßnahmen zur thermischen Stabilisierung und zum thermischen Schutz des Zellgehäuses nicht auf eine bestimmte Art der Batteriezelle oder Form des Zellgehäuses beschränkt. Beispielsweise kann das Zellgehäuse eine prismatische Form, eine Rundform und dergleichen aufweisen.

Nachstehend werden mehrere Ausführungsbeispiele der Erfindung anhand der Zeichnungen näher erläutert. Es zeigen:
- Fig. 1: eine perspektivische Darstellung einer Anordnung gemäß einer ersten Ausführungsform der Erfindung,
- Fig. 2: eine Explosionsdarstellung zum Veranschaulichen eines Aufbaus einer Batteriezelle mit einer Anordnung aus Fig. 1 gemäß einer Ausführungsform der Erfindung,
- Fig. 3: eine Schnittdarstellung eines bodenseitigen Bereichs der Batteriezelle aus Fig. 2,
- Fig. 4: eine Schnittdarstellung eines bodenseitigen Bereichs einer erfindungsgemäßen Batteriezelle mit einer thermischen Verstärkung in Form einer Verdickung,
- Fig. 5: eine Schnittdarstellung eines bodenseitigen Bereichs einer erfindungsgemäßen Batteriezelle mit einer thermischen Verstärkung in Form einer Plattierung,
- Fig. 6-8: Darstellungen zum Veranschaulichen einer Anordnung zur thermischen Verstärkung mit einer bereichsweisen Verdickung einer Wandung des Zellgehäuses,
- Fig. 9-11: Darstellungen zum Veranschaulichen einer Anordnung zur thermischen Verstärkung eines Zellgehäuses in Form eines Verstärkungseinsatzes,
- Fig. 12-15: Darstellungen zum Veranschaulichen einer Anordnung zur thermischen Verstärkung eines Zellgehäuses mit Hilfe einer Verstärkungsleiste,
- Fig. 16-17: Darstellungen zum Veranschaulichen einer Anordnung zur thermischen Verstärkung eines Zellgehäuses durch eine bereichsweise Beschichtung,
- Fig. 18-19: Darstellungen zum Veranschaulichen einer Anordnung zur thermischen Verstärkung eines Zellgehäuses durch bereichsweise Plattierung des Zellgehäuses,
- Fig. 20-21: Darstellungen zum Veranschaulichen einer Anordnung zur thermischen Verstärkung eines Zellgehäuses durch eine Isolierung des Zellgehäuses von einem Elektrodenstapel durch eine thermisch isolierende Matte,
- Fig. 22-23: Darstellungen zum Veranschaulichen einer Anordnung zur thermischen Verstärkung eines Zellgehäuses in Form eines Verstärkungseinsatzes gemäß einer weiteren Ausführungsform,

In den Abbildungen kennzeichnen identische Bezugsziffern dieselben Elemente bzw. konstruktiven Bestandteile. Die Größen und relativen Positionen der Elemente in den Abbildungen sind nicht unbedingt maßstabsgetreu gezeichnet, und einige dieser Elemente sind vergrößert dargestellt und der Übersicht halber angepasst positioniert. Darüber hinaus sollen die besonderen Formen der gezeichneten Elemente keine Informationen über die tatsächliche Form der einzelnen Elemente vermitteln, sondern wurden lediglich zur leichteren Erkennbarkeit in den Abbildungen ausgewählt.

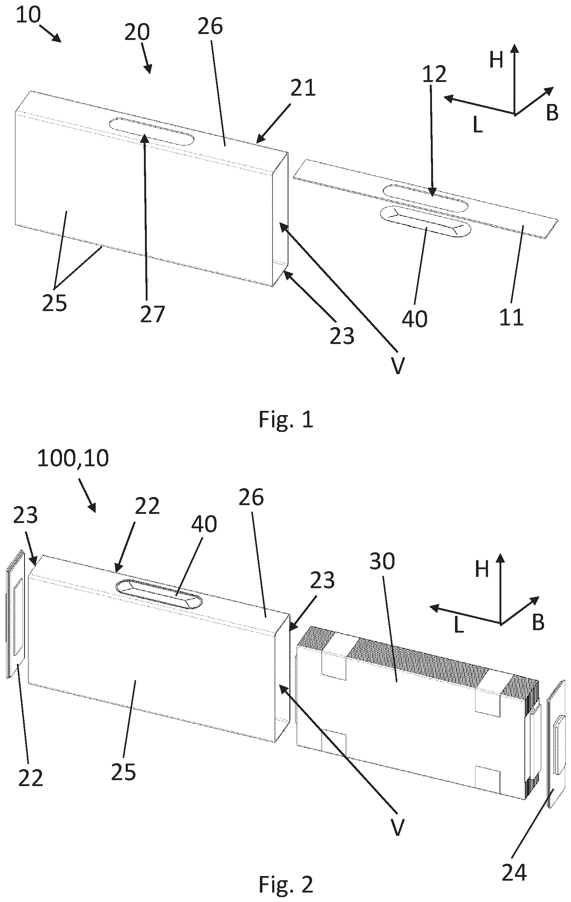

In Fig. 1 ist eine perspektivische Darstellung einer Verstärkungsanordnung bzw. Anordnung 10 gemäß einer ersten Ausführungsform der Erfindung gezeigt. Die Anordnung 10 dient zur thermischen Verstärkung eines Zellgehäuses 20 einer Batteriezelle 100, welche beispielhaft in Fig. 2 veranschaulicht ist. Fig. 2 zeigt eine Explosionsdarstellung zum Veranschaulichen eines Aufbaus der Batteriezelle 100 mit der Anordnung 10 aus Fig. 1.

Die Anordnung 10 weist ein Zellgehäuse 20 mit einem Innenvolumen V und mindestens einen Elektrodenstapel 30 auf. Der mindestens eine Elektrodenstapel 30 kann je nach Ausgestaltung auch als ein Elektrodenwickel ausgeführt sein und mehrere nicht bezifferte Anodenfolien, Kathodenfolien und Separatorfolien umfassen.

Der Elektrodenstapel 30 ist in dem Innenvolumen V des Zellgehäuses 20 angeordnet und kann auch einen festen oder flüssigen Elektrolyten umfassen. Das Zellgehäuse 20 ist im dargestellten Ausführungsbeispiel durch ein innenseitig angeordnetes Verstärkungselement 11 aus einem Metall, wie beispielsweise Aluminium, thermisch verstärkt.

In Fig. 1 wird eine Berstmembran 40 in das Verstärkungselement 11 eingebracht und durch Laserschweißen mit dem Verstärkungselement 11 verbunden. Anschließend wird das Verstärkungselement 11 mit der Berstmembran 40 innenseitig in das Zellgehäuse 20 geschoben und mit dem Zellgehäuse 20 stoffschlüssig verbunden.

Die Berstmembran 40 wird in einem bodenseitigen Bereich der Batteriezelle 100 bzw. des Zellgehäuses 20 positioniert und soll in einer Einbauposition der Batteriezelle 100 in Richtung eines Untergrunds bzw. in Schwerkraftrichtung zeigen.

Das Zellgehäuse 20 kann beispielsweise durch einen Zellgehäusemantel 21 und mindestens einen Zelldeckel 22 gebildet werden. Je nach Ausgestaltung kann der Zellgehäusemantel 21 zwei Öffnungen 23 aufweisen, welche durch zwei Zelldeckel 22, 24 verschlossen werden können, um das Innenvolumen V des Zellgehäuses 20 zu verschließen.

Der Zellgehäusemantel 21 besteht in den dargestellten Ausführungsbeispielen aus vier Wandungen 25, 26, die eine Ausbildung einer prismatischen Form ermöglichen. Je nach Ausgestaltung kann der Zellgehäusemantel 21 auch aus einer Wandung 25 oder aus mehr als vier Wandungen ausgebildet sein, um beispielsweise eine Rundzelle oder eine anders geformte Batteriezelle 100 auszubilden.

In einer bodenseitigen Wandung 26 des Zellgehäusemantels 21 des Zellgehäuses 20 ist eine Öffnung bzw. Berstöffnung 27 vorgesehen, die ein Hinausleiten von Gasen und Partikeln bei einem Überdruck im Innenvolumen V ermöglicht.

Diese Berstöffnung 27 wird vorzugsweise von der Berstmembran 40 verdeckt oder verschlossen. In der Fig. 1 und Fig. 2 ist die Anordnung 10 derart gedreht, dass die bodenseitige Wandung 26 entgegen ihrer üblichen Einbaulage nach oben zeigt, um den Aufbau der Anordnung 10 zu veranschaulichen.

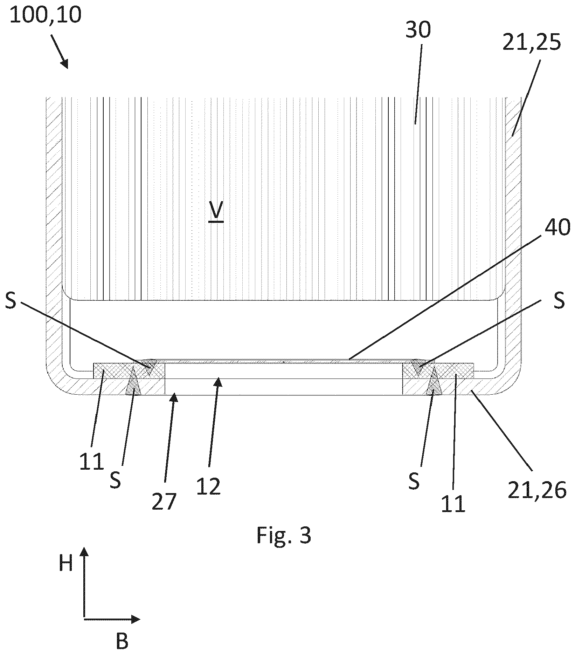

Im in Fig. 1 bis Fig. 3 gezeigten Ausführungsbeispiel wird die Berstmembran 40 in eine Öffnung bzw. Ausnehmung 12 des Verstärkungselements 11 eingebracht. Das Verstärkungselement 11 mit der Berstmembran 40 wird innenseitig gegen die bodenseitige Wandung 26 des Zellgehäuses 20 gelegt. Anschließend kann die Berstmembran 40 indirekt durch das Verstärkungselement 11 stoffschlüssig bzw. durch eine von außen eingebrachte Schweißnaht S mit der bodenseitigen Wandung 26 verbunden werden. Diese Verbindung ist in Fig. 3 in einer Schnittdarstellung veranschaulicht.

Das als Verstärkungsleiste ausgestaltete Verstärkungselement 11, an welchem innenseitig auch die Ventingmembran bzw. Berstmembran 40 angebracht ist, wird von außen mittels einer Durchweißung oder Kehlnahtschweißung mit dem Zellgehäuse 20 verbunden. Durch eine hinreichende Materialstärke des Verstärkungselements 11 entlang einer Höhenrichtung H an der bodenseitigen Wandung 26 bzw. der Gehäusemantelunterseite des Zellgehäuses 20 kann eine Zerstörung des Zellgehäuses 20 durch heißes Ventinggas bei einem thermischen Durchgehen verhindert oder verzögert werden.

Darüber hinaus kann der Zellgehäusemantel 21 durch das verschweißte Verstärkungselement 11 im Bereich der Berstöffnung 27 auch mechanisch verstärkt werden, um bei einem zunehmenden Zellinnendruck im Innenvolumen V entstehende Zugkräfte auf die dünne und empfindliche Berstmembran 40 zu kompensieren.

Nach dem Ausbilden einer derartigen Verstärkungsanordnung 10 können Zellkomponenten, wie beispielsweise der Elektrodenstapel 30 in den Zellgehäusemantel 21 eingebracht und der Zellgehäusemantel 21 durch Zelldeckel 22, 23 verschlossen werden. Ein möglicher Unterschied zwischen der Anordnung 10 und der Batteriezelle 100 kann beispielsweise darin bestehen, dass die Batteriezelle 100 weitere Bestandteile, wie beispielsweise Isolierungen, Ableitern bzw. Zellverbindern, Kontaktelementen in oder an den Zelldeckeln 22, 24 und dergleichen, aufweist.

In den dargestellten Ausführungsbeispielen ist die Berstmembran 40 als ein separates Bauteil ausgeführt und wird durch einen zusätzlichen Verbindungsschritt stoffschlüssig in die Batteriezelle 100 bzw. das Zellgehäuse 20 eingebracht. Je nach Ausgestaltung kann die Berstmembran 40 direkt in den Zellgehäusemantel 21 eingeprägt werden.

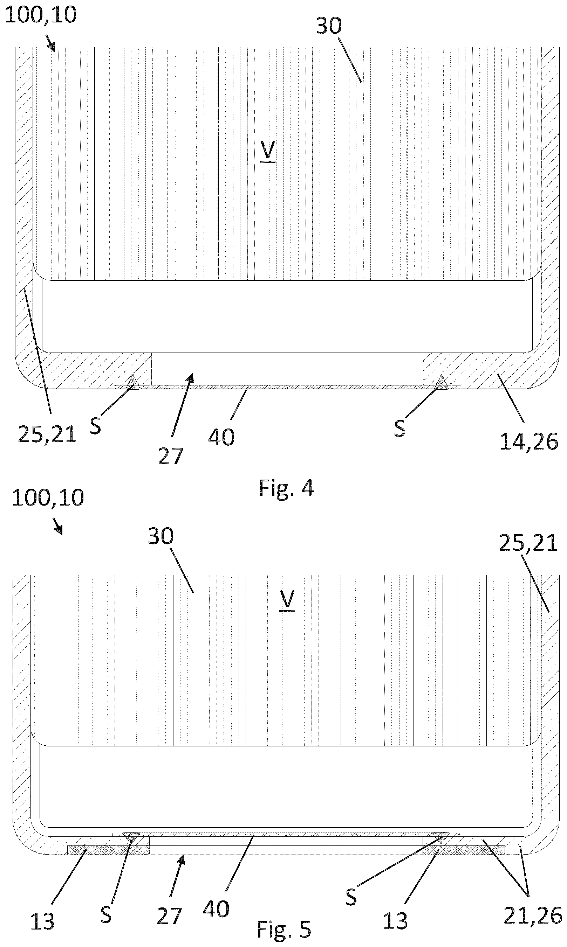

Die Fig. 4 zeigt eine weitere Schnittdarstellung eines bodenseitigen Bereichs einer erfindungsgemäßen Batteriezelle 100 mit einer thermischen Verstärkung in Form einer bereichsweisen Verdickung der bodenseitigen Wandung 26 des Zellgehäusemantels 21.

Der bodenseitige Bereich der Batteriezelle 100 bildet einen Bereich bzw. Abschnitt aus, auf welchem die Batteriezelle 100 auf einem nicht dargestellten Untergrund abgestellt werden kann. Dabei wirkt eine Schwerkraft in Richtung der bodenseitigen Wandung 26, die als Basis oder unterster Punkt der Batteriezelle 100 dient. Die Batteriezelle 100 kann dabei auf einer Basis oder einer Aufnahme eines Batteriemoduls, eines Einbaurahmens, einer Aufnahmestruktur, eines Batteriesystems und dergleichen positioniert werden. Die Berstmembran 40 kann dabei vorteilhafterweise in Richtung der Schwerkraft bzw. nach unten zeigen und im Falle eines thermischen Durchgehens die resultierenden Gase, Partikel und Flüssigkeiten bodenseitig aus dem Innenvolumen V hinausleiten.

Bei der in Fig. 4 gezeigten Ausführung kann die Zellbauform durch eine entsprechende Gestaltung eines Strangpresswerkzeugs dahingehend angepasst werden, dass die Unterseite des Zellgehäusemantels 21 bzw. die bodenseitige Wandung 26 ohne zusätzliche Bauteile besonders kosteneffizient durch eine definierte Aufdickung bzw. Verdickung 14 verstärkt wird. Hierdurch weist die bodenseitige Wandung 26 eine gegenüber den anderen Wandungen 25 größere Materialstärke auf.

Der Zellgehäusemantel 21 kann dabei einteilig durch ein Strangpressverfahren hergestellt werden, bei dem die bodenseitige Wandung 26 mit einer größeren Materialstärke gegenüber dem Rest des Zellgehäusemantels 21 bzw. Verdickung 14 einstellbar ist.

In der Fig. 5 ist eine Schnittdarstellung eines bodenseitigen Bereichs einer erfindungsgemäßen Batteriezelle 100 mit einer thermischen Verstärkung in Form einer Plattierung 13 gezeigt. Im Unterschied zu den bereits beschriebenen Ausführungsformen ist hier auf der bodenseitigen Wandung 26 des Zellgehäuses 20 eine Materialverstärkung durch eine Plattierung realisiert. Im Bereich der Öffnung 27, die in der bodenseitigen Wandung 26 positioniert ist, wird außen eine Plattierung aus einem temperaturstabilen Edelstahl oder einem anderen temperaturstabilen Metall bzw. Metalllegierung appliziert. Die eingebrachte Plattierung 13 umgibt die Berstöffnung 27 umfangsseitig und kann beispielsweise lokal im Bereich der Berstöffnung 27 oder vollflächig die gesamte oder nahezu gesamte bodenseitige Wandung 26 bedecken.

Ein temperaturstabiles Metall bzw. eine temperaturstabile Metalllegierung kann vorzugsweise eine gegenüber dem Material des Zellgehäuses 20 höheren Schmelzpunkt aufweisen.

Der Zellgehäusemantel 21 kann bei dieser Ausführungsmöglichkeit aus einem kastenförmig gebogenen Blech geschweißt werden. Das Blech kann im Bereich der Berstöffnung 27 bzw. sogenannter Ventöffnung außen bereits eine Plattierung 13 aufweisen, die durch einen Walzprozess mit oder ohne nachfolgender Glühung stoffschlüssig mit dem Material des Blechs bzw. Zellgehäuses 20 verbunden werden. Das Material des Blechs bzw. des Zellgehäuses 20 kann beispielsweise eine Aluminiumlegierung sein.

Vor der Biegung des plattierten Blechs kann innen bzw. in Richtung des auszubildenden Innenvolumens V die Berstmembran 40 angeordnet und geschweißt werden, sodass die Kontaktstelle zwischen der Plattierung 13 aus Edelstahl und dem Grundmaterial aus Aluminium nicht durch einen Elektrolyten im Innenvolumen V benetzt werden kann. Hierdurch kann Kontaktkorrosion effektiv unterbunden werden.

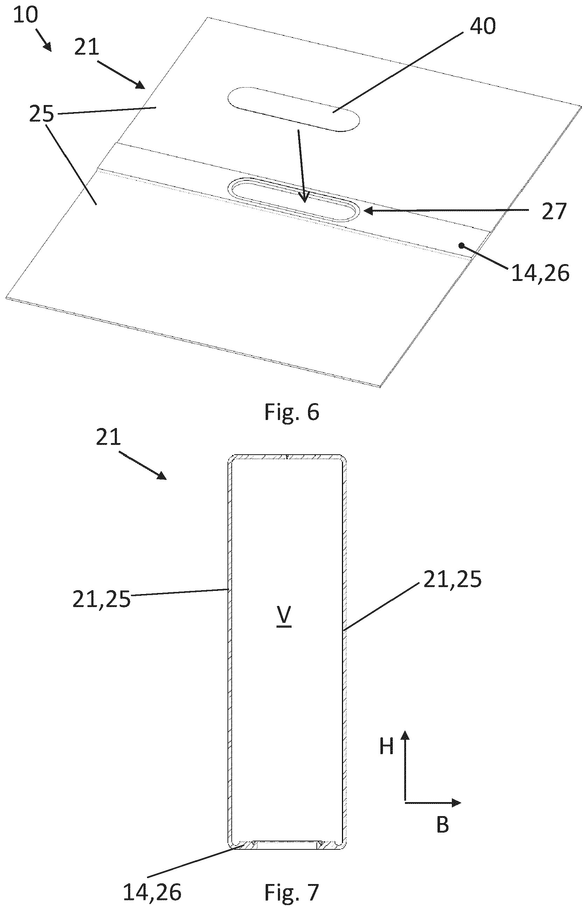

Die Fig. 6, Fig. 7 und Fig. 8 zeigen Darstellungen zum Veranschaulichen einer Anordnung 10 zur thermischen Verstärkung des Zellgehäuses 20, insbesondere der bodenseitigen Zellwandung 26 des Zellgehäusemantels 21 des Zellgehäuses 20, mit einer bereichsweisen Verdickung 14 der bodenseitigen Wandung 26 des Zellgehäuses 20.

Im gezeigten Ausführungsbeispiel kann die gesamte bodenseitige Wandung 26 dabei verdickt ausgeführt sein. Alternativ kann die Berstöffnung 27 in der bodenseitigen Wandung 26 durch die Verdickung 14 umrahmt sein, um eine lokale thermische Verstärkung zu erzielen. Beispielhaft ist die bodenseitige Wandung 26 als eine Verdickung 14 ausgestaltet. Im Unterschied zum in Fig. 4 gezeigten Ausführungsbeispiel wird hier die Verdickung 14 durch ein Walzen des in Fig. 6 gezeigten Blechs und nicht durch einen Tiefziehprozess ausgebildet. Das Blech kann dabei als ein Profilblech ausgeführt sein.

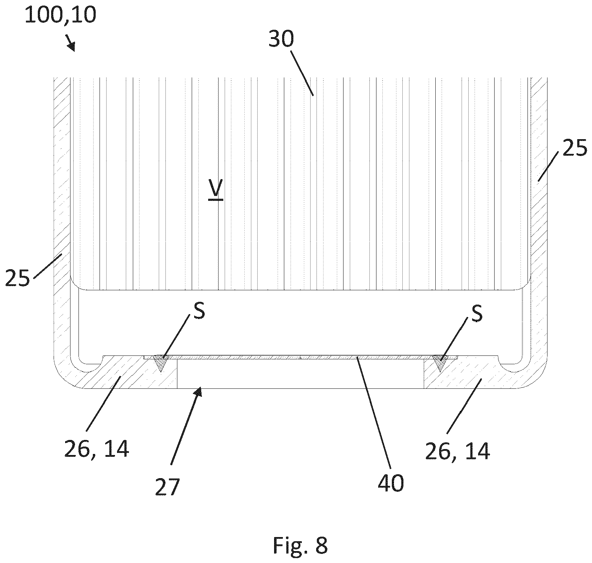

Das in Fig. 6 gezeigte Blech kann durch Verbiegen und Schweißen zu einem Zellgehäusemantel 21 geformt werden, welcher in Fig. 7 veranschaulicht ist. Zum technisch einfachen Biegen des Blechs kann ein Randbereich der bodenseitigen Wandung 26 mit einer reduzierten Materialstärke ausgeführt sein. Diese Variation in der Materialstärke der bodenseitigen Wandung 26 ist in der Fig. 8 in einer Detailansicht des bodenseitigen Bereichs der Batteriezelle 100 verdeutlicht.

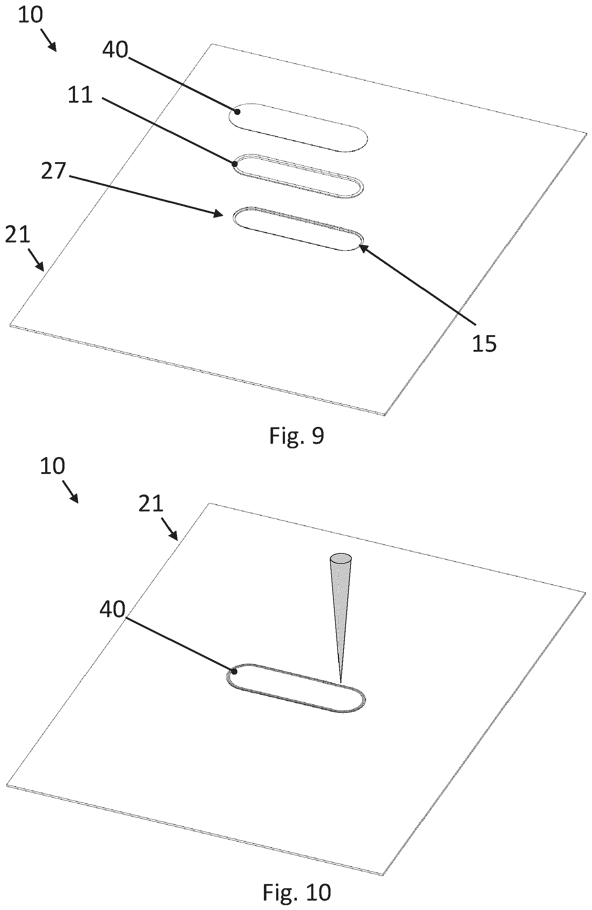

Die Fig. 9, Fig. 10 und Fig. 11 zeigen Darstellungen zum Veranschaulichen einer Anordnung 10 zur thermischen Verstärkung eines Zellgehäuses 20 in Form eines Verstärkungseinsatzes 11.

Im Unterschied zum in Fig. 1 gezeigten Ausführungsbeispiel wird das Verstärkungselement 11 nicht direkt mit dem Zellgehäuse 20 verschweißt, sondern indirekt durch die Berstmembran 40 ortsfest arretiert bzw. fixiert.

Analog zu den bereits beschriebenen Ausführungsmöglichkeiten wird ein Blech mit einer eingebrachten Berstöffnung 27 verwendet, welches nachträglich verbogen und geschweißt wird, um den kastenförmig gebogenen Zellgehäusemantel 21 auszubilden.

Vor der Biegung des Blechs wird in einer im Bereich der Berstöffnung 27 eingebrachten Senkung 15 ein Verstärkungselement 11 in Form eines Einsatzes aus temperaturstabilem Material eingesetzt. Ein derartiges Verstärkungselement 11 kann beispielsweise aus Edelstahl, Nickel, Keramik, Graphit und dergleichen hergestellt sein und wird im gezeigten Ausführungsbeispiel nicht direkt mit dem Zellgehäusemantel 21 verschweißt.

Das Verstärkungselement 11 ist ringförmig bzw. rahmenförmig ausgebildet und umgibt die Berstöffnung 27 in der Senkung bzw. Ausnehmung 15 umfangsseitig. Die Fig. 9 veranschaulicht in einer Explosionsdarstellung das Verstärkungselement 11, das Blech zum Ausbilden des Zellgehäusemantels 21 und die Berstmembran 40. In der Fig. 10 wird die Berstmembran 40 mit dem Zellgehäusemantel 21, insbesondere mit der bodenseitigen Wandung 26, verschweißt und fungiert dabei als Deckel für das in der Senkung 15 eingelegte Verstärkungselement 11. In der Fig. 10 ist auch das Einbringen einer Schweißnaht S, beispielsweise durch Laserschweißen illustriert.

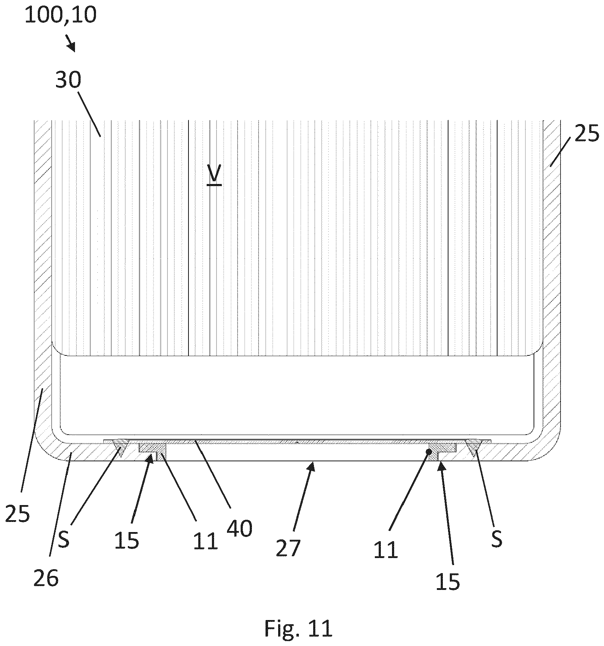

Durch die Verdeckung des Verstärkungselements 11 mit der Berstmembran 40 wird das Verstärkungselement 11 verkapselt, sodass ein Kontakt zwischen dem Verstärkungselement 11 und dem Elektrolyten verhindert wird. Somit können für das Verstärkungselement 11 Materialien eingesetzt werden, die beispielsweise chemisch gegenüber dem Elektrolyten nicht beständig sind. Die Fig. 11 veranschaulicht in einer Detailansicht die verkapselte Anordnung des Verstärkungselements 11 in der Senkung 15.

Das Verstärkungselement 11 ist abgestuft geformt, und ragt durch die Berstöffnung 27 hinaus, um den Rand bzw. Wand der Berstöffnung 27 thermisch zu verstärken. Darüber hinaus ermöglicht die abgestufte Form des Verstärkungselements 11 eine besonders einfache Montage durch einen gezielten Formschluss zwischen dem Verstärkungselement 11 und der bodenseitigen Wandung 26.

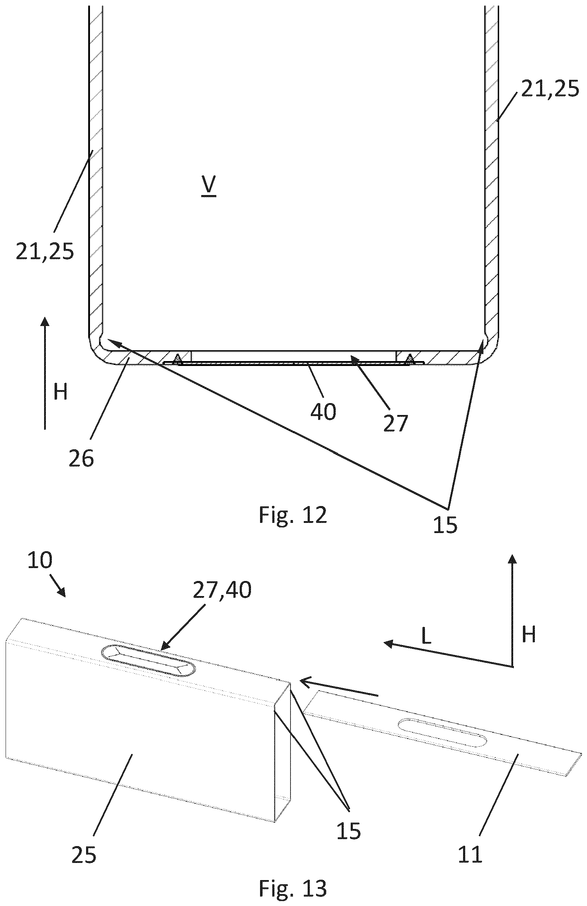

In der Fig. 12, Fig. 13, Fig. 14 und Fig. 15 sind Darstellungen zum Veranschaulichen einer Anordnung 10 zur thermischen Verstärkung eines Zellgehäuses 20 mit Hilfe eines Verstärkungselements 11 in Form einer Verstärkungsleiste gezeigt. Im Unterschied zu den bereits beschriebenen Varianten des Verstärkungselements 11, wird hier ein Verstärkungselement 11 in Form einer Verstärkungsleiste veranschaulicht, welche ohne eine stoffschlüssige Verbindung im Zellgehäuse 20 ortsfest positioniert werden kann.

Das als Verstärkungsleiste ausgebildete Verstärkungselement 11 kann in randseitig eingebrachte Ausnehmungen 15 bzw. Nuten hineingeschoben und somit zumindest entlang einer Raumrichtung H ortsfest arretiert werden. Die Fig. 13 veranschaulicht beispielhaft ein Hineinschieben des Verstärkungselements 11 in Pfeilrichtung bzw. in Längenrichtung L in die Ausnehmungen 15 durch eine der zwei Öffnungen 23 des Zellgehäusemantels 21.

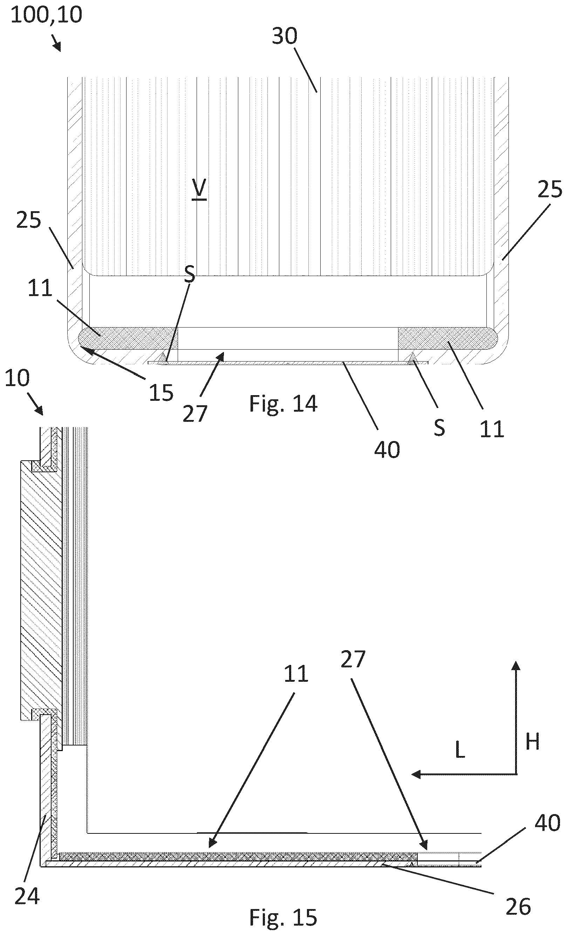

Die Ausnehmungen 15 sind an zwei einander gegenüberliegenden Wandungen 25 des Zellgehäusemantels 21 angeordnet. Das in die Ausnehmungen 15 positionierte Verstärkungselement 11 kann durch endseitig am Zellgehäusemantel 21 angebrachte Zelldeckel 24 in Längenrichtung L gegen ein Verschieben arretiert werden. Eine derartige Arretierung des Verstärkungselements 11 in Längenrichtung L ist in der Fig. 15 veranschaulicht.

Da das Verstärkungselement 11 in Kontakt mit dem Zellgehäusemantel 21 aus Aluminium ist und dem Elektrolyten in Verbindung kommt, kann das Verstärkungselement 11 zur Vermeidung von Kontaktkorrosion entweder ebenfalls aus Aluminium bestehen oder mit einer allseitigen Beschichtung aus Aluminium versehen sein. Eine derartige Beschichtung aus Aluminium kann beispielsweise durch Flammspritzung oder Tauchung erfolgen. Bei einer alternativen Ausgestaltung kann das Verstärkungselement 11 mit einer elektrisch nicht leitenden Beschichtung, wie beispielsweise PP oder PET, einer Keramik und dergleichen versehen sein.

Die Maßnahmen zur Vermeidung von Kontaktkorrosion können beispielsweise eingesetzt werden, wenn das Verstärkungselement 11 aus Edelstahl oder Nickel besteht. Je nach Ausgestaltung kann das Verstärkungselement 11 komplett aus einem nicht elektrisch leitfähigen und temperaturstabilen Material, beispielsweise aus einer Keramik, hergestellt sein. Als Keramik für das Verstärkungselement 11 können Al₂O₃, Si₃N₄, ZrO₂ und dergleichen verwendet werden.

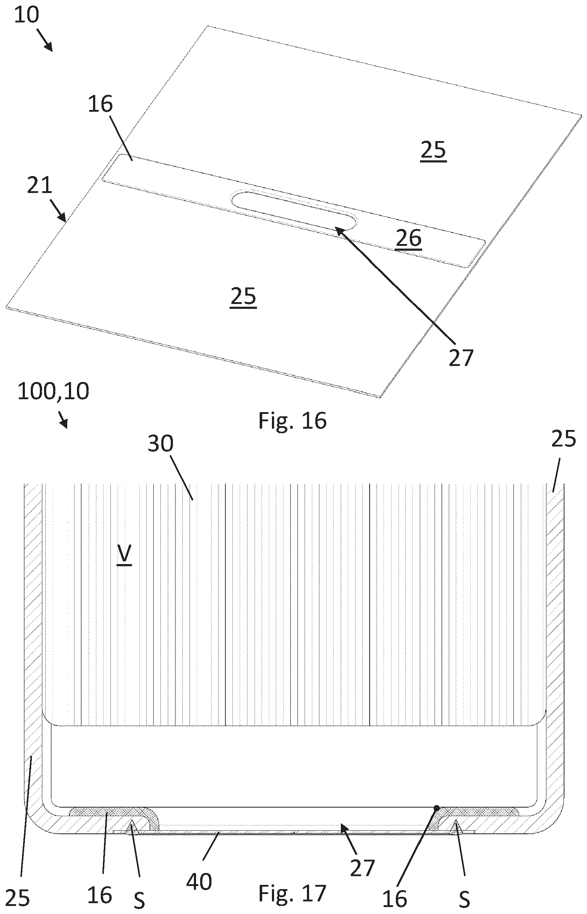

Die Fig. 16 und Fig. 17 zeigen weitere Darstellungen zum Veranschaulichen einer Anordnung 10 zur thermischen Verstärkung eines Zellgehäuses 20 durch eine bereichsweise Beschichtung 16. Analog zum in Fig. 9 und Fig. 10 gezeigten Ausführungsbeispiel kann hier der kastenförmige Zellgehäusemantel 21 aus einem gebogenen und verschweißten Blech hergestellt werden. Die Beschichtung 16 ist als ein zumindest bereichsweise stoffschlüssig aufgebrachtes Material ausgestaltet.

Vor der Biegung des Blechs und vor der Verschweißung der Berstmembran 40 über der Berstöffnung 27 wird im gezeigten Ausführungsbeispiel der Bereich um die Ventingöffnung bzw. Berstöffnung 27 auf der späteren Zellinnenseite der bodenseitigen Wandung 26 mit einer temperatur- und elektrolytstabilen Beschichtung 16 versehen.

Die Beschichtung 16 kann aus einer Keramik, wie beispielsweise Al₂O₃, bestehen, die durch ein thermisches Spritzverfahren appliziert werden kann. Durch die mangelnde elektrische Leitfähigkeit der beispielhaft keramischen Beschichtung 16 kann Kontaktkorrosion vermieden werden.

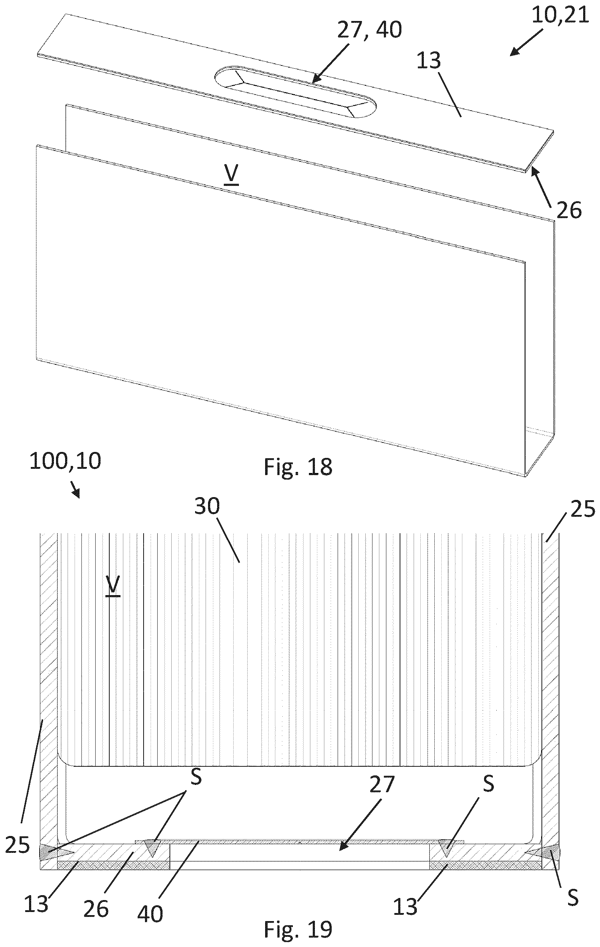

Die Fig. 18 und Fig. 19 zeigen Darstellungen zum Veranschaulichen einer Anordnung 10 zur thermischen Verstärkung eines Zellgehäuses 20 durch bereichsweise Plattierung 13 des Zellgehäuses 20. Im Unterschied zum in Fig. 5 gezeigten Ausführungsbeispiel wird die bodenseitige Wandung 26 unabhängig vom dem restlichen Wandungen 25 des Zellgehäusemantels 21 bereitgestellt. Dabei wird die bodenseitige Wandung 26 einseitig mit einer Plattierung 13 versehen. Die Plattierung 13 ist im gezeigten Ausführungsbeispiel außenseitig an der bodenseitigen Wandung 26 des Zellgehäuses 20 appliziert.

Die bodenseitige Wandung 26 bildet eine Unterseite der Batteriezelle 100 und ist beispielhaft aus Aluminium hergestellt. Zur thermischen Verstärkung ist die bodenseitige Wandung 26 mit

Edelstahl oder Nickel plattiert und/oder beschichtet. Dabei wird eine Berstöffnung 27 in die bereits plattierte und/oder beschichtete bodenseitige Wandung 26 eingebracht, um die Berstmembran 40 anzuordnen.

Die Berstmembran 40 wird beispielsweise innenseitig auf die bodenseitige Wandung 26 geschweißt, sodass eine aus Aluminium hergestellte Berstmembran 40 mit einem identischen Material der bodenseitigen Wandung 26 besonders zuverlässig verschweißt werden kann.

Der Rest 25 des Zellgehäusemantels 21 kann ebenfalls aus Aluminium bestehen und wird U-förmig gebogen. Die thermisch verstärkte bodenseitige Wandung 26 mit der Berstmembran 40 kann anschließend mit zwei artreinen und technisch einfach umsetzbaren Schweißnähten S mit den restlichen Wandungen 25 des Zellgehäusemantels 21 befestigt werden, um den kastenförmigen Zellgehäusemantel 21 fertigzustellen.

In der Fig. 19 sind in einer Detailansicht des bodenseitigen Bereichs bzw. der Unterseite der Batteriezelle 100 die Schweißverbindungen S zwischen den Wandungen 25, 26 des Zellgehäusemantels 21 besonders verdeutlicht. Da die Kontaktstelle zwischen der Plattierung 13 und dem Material der bodenseitigen Wandung 26 nicht in Berührung mit dem Elektrolyten kommt, wird Kontaktkorrosion vermieden.

Die thermische Verstärkung mit Hilfe einer Plattierung 13 kann beispielsweise durch ein beaufschlagen von zwei Blechen mit unterschiedlichen Materialien, wie beispielsweise Edelstahl und Aluminium, umgesetzt werden. Dabei können die durch Walzen miteinander verbundenen Bleche auch erhitzt werden. Alternativ oder zusätzlich zum Plattieren 13 können Bereiche des Zellgehäuses 20 mit einer Beschichtung 16 versehen werden. Für eine Beschichtung 16 kann das Material der Beschichtung 16 vorzugsweise in einen gasförmigen oder plasmaförmigen oder flüssigen Zustand überführt werden. Nach der Veränderung des Aggregatzustands kann die Beschichtung 16 appliziert werden.

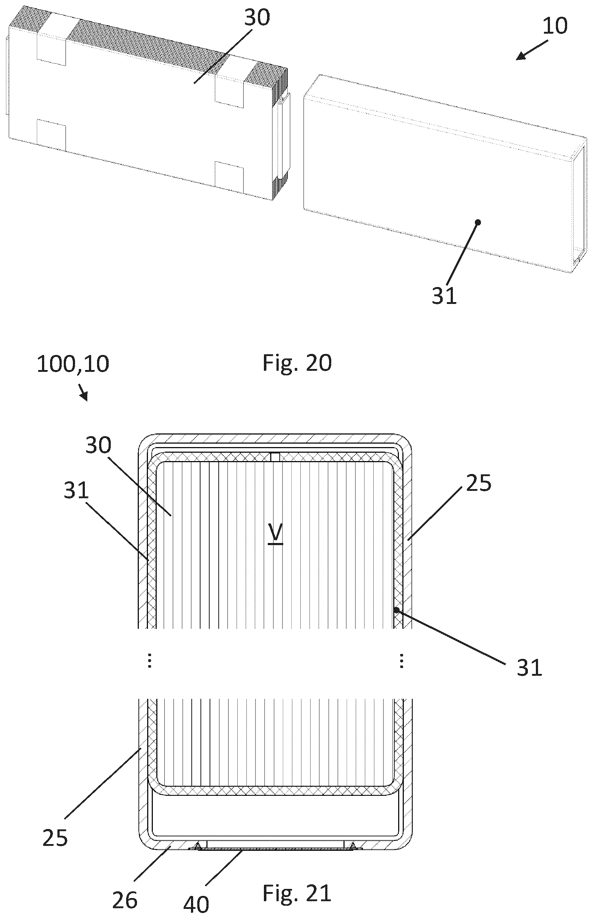

Die Fig. 20 und Fig. 21 zeigen Darstellungen zum Veranschaulichen einer Anordnung 10 zur thermischen Verstärkung eines Zellgehäuses 20 durch eine Isolierung des Zellgehäuses 20 von einem Elektrodenstapel 30 durch ein thermisch wirksames Element 31. Im gezeigten Ausführungsbeispiel ist das thermische wirksame Element 31 beispielhaft als eine thermisch isolierende Matte 31 ausgeführt.

Die thermisch isolierende Matte 31 ist im Innenvolumen V des Zellgehäuses 20 angeordnet und umgibt zumindest bereichsweise den mindesten einen Elektrodenstapel 30. Insbesondere kann die Matte 31 den Elektrodenstapel 30 umhüllen, um eine thermische Isolierung zwischen den Wandungen 25, 26 des Zellgehäuses 20 und dem Elektrodenstapel 30 zu formen.

Die thermisch isolierende Matte 31 ist beispielhaft als eine Keramikfasermatte ausgestaltet und kann aus Al₂O₃, Si₃N₄ und dergleichen bestehen.

Die hoch temperaturfeste Matte 31 kann darüber hinaus eine Filterwirkung aufweisen, um im Fall eines thermischen Durchgehens feste und brennende Partikel im Innenvolumen V des Zellgehäuses 20 zurückzuhalten. Durch diesen Effekt kann auch die spezifische Wärmekapazität des durchtretenden Gases bei einem thermischen Durchgehen abgesenkt werden. Diese Maßnahme kann somit die Temperatur des austretenden Gases senken und ein Aufschmelzen des Zellgehäuses 20 im Bereich der Berstmembran 40 bzw. der entsprechenden Berstöffnung 27 vermeiden.

Weiterhin wird durch die geringe spezifische Wärmeleitfähigkeit der Matte 31 und durch den durch diese eingestellten Spalt zwischen dem Elektrodenstapel 30 und dem Zellgehäuse 20 eine zusätzliche Isolierwirkung erzielt.

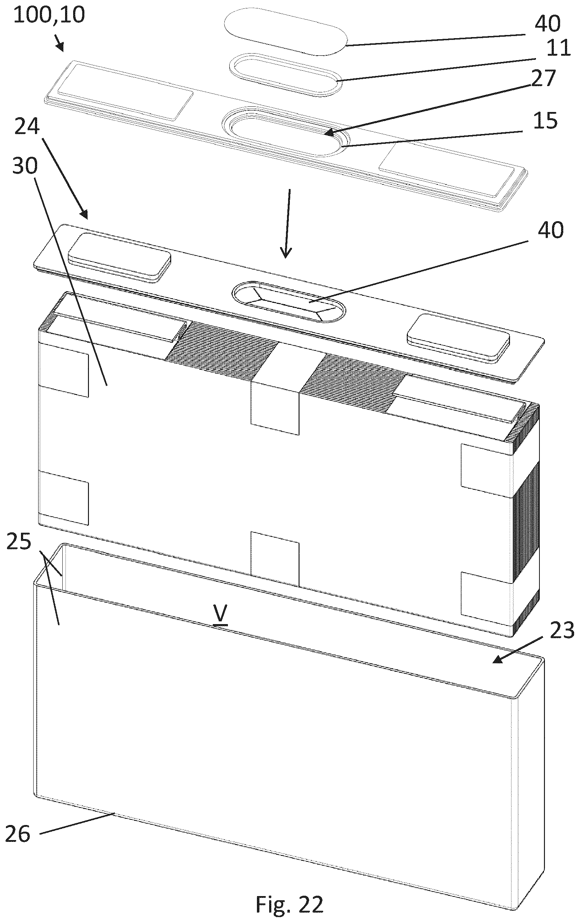

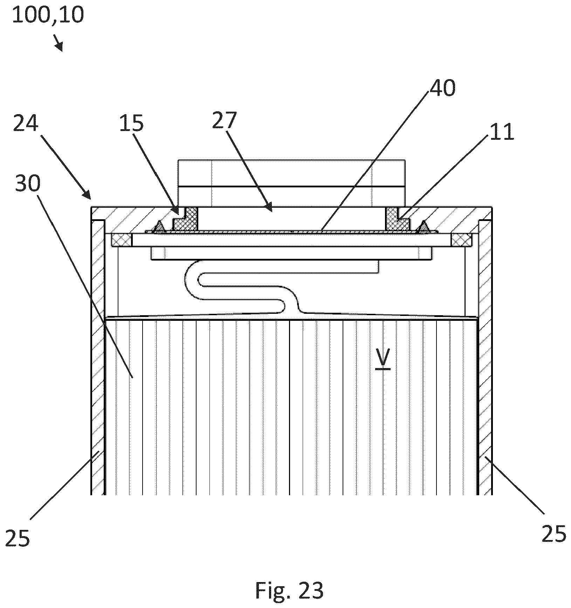

In der Fig. 22 und Fig. 23 sind Darstellungen zum Veranschaulichen einer Anordnung 10 zur thermischen Verstärkung eines Zellgehäuses 30 in Form eines Verstärkungseinsatzes 11 gemäß einer weiteren Ausführungsform gezeigt. Im Unterschied zum Verstärkungseinsatz 11, welcher in Fig. 9 bis Fig. 11 gezeigt ist, wird hier der Verstärkungseinsatz 11 in einen Zelldeckel 24 des Zellgehäuses 20 eingebracht. Die in Fig. 22 und Fig. 23 dargestellte Batteriezelle 100 weist im gezeigten Ausführungsbeispiel genau eine Öffnung 23 zum Einbringen des Elektrodenstapels 30 auf. Das Innenvolumen V des Zellgehäuses 20 wird somit durch einen Zelldeckel 24 verschlossen.

Die dargestellte Batteriezelle 100 ist als eine klassische, prismatische Hardcase-Zelle ausgeführt, bei welcher beide Batteriepole und die Berstöffnung 27 für das sogenannte Venting im Falle eines thermischen Durchgehens in dem Zelldeckel 24 auf der Zelloberseite angeordnet sind.

Die Fig. 22 zeigt eine Explosionsdarstellung, bei welcher verdeutlicht wird, dass die Berstmembran 40 analog zum in Fig. 11 gezeigten Ausführungsform ein Verstärkungselement 11 in Form eines Verstärkungseinsatzes verdeckt und ortsfest in einer Senkung 15 arretiert. Dabei ist in Fig. 22 der Zelldeckel 24 von einer Unterseite bzw. einer zum Innenvolumen V gerichteten Seiten und von einer Oberseite bzw. externen Seite der Batteriezelle 100 gezeigt.

Die thermische Verstärkung der empfindlichen Berstöffnung 27 für die Berstmembran 40 erfolgt durch das Verstärkungselement 11 aus einem temperaturstabilen Material, wie beispielsweise Edelstahl, Nickel, Keramik und dergleichen, welches in der Senkung 15 die Berstöffnung 27 umfangsseitig umgibt. Das Verstärkungselement 11 wird von der Innenseite des Zellgehäusedeckels 24 in die Senkung 15 hineingelegt und anschließend von der Berstmembran 40 verdeckt, sodass die Berstmembran 40 das Elektrolyt vom Verstärkungselement 11 trennen kann. Die Berstmembran 40 kann anschließend mit dem Zelldeckel 24 verschweißt werden. Die Fig. 23 kann den Aufbau der Batteriezelle 100 im in Fig. 22 gezeigten Ausführungsbeispiel im Bereich des Zelldeckels 24 durch eine Schnittdarstellung veranschaulichen. Dabei bildet der Zelldeckel 24 eine dem bodenseitigen Bereich entgegengesetzt angeordnete Oberseite der Batteriezelle 100, die in einem eingebauten Zustand der Batteriezelle 100 entgegen einer Schwerkraftrichtung zeigen kann.

Die Anordnung des bodenseitigen Bereichs bzw. der bodenseitigen Wandung 26 und der Oberseite können je nach Ausgestaltung und Anordnung der Batteriezelle 100 variieren. Insbesondere kann eine Batteriezelle 100 auch seitlich oder liegend montiert werden, sodass beispielsweise die bodenseitige Wandung 26 quer zur Schwerkraftrichtung ausgerichtet ist. Auch kann die Batteriezelle 100 in einem Winkel verbaut sein und somit im eingebauten Zustand eine quer zur oder quer entgegen der Schwerkraftrichtung gerichtete bodenseitige Wandung 26 aufweisen. Dabei kann die Ausrichtung der bodenseitigen Wandung 26 einer Richtung einer Flächennormale entsprechen oder parallel zu der Flächennormale verlaufen.

Die unterschiedlichen, in den Figuren beschriebenen, Ausführungsbeispiele können isoliert oder miteinander beliebig kombiniert eingesetzt werden, um eine zumindest bereichsweise thermische Verstärkung und/oder eine zumindest bereichsweise thermische Isolierung des Zellgehäuses 20 gegenüber dem Elektrodenstapel 30 zu bewirken.

Die thermische Isolierung und/oder thermische Verstärkung des Zellgehäuses 20 und/oder die thermische Isolierung 30 des Zellgehäuses 20 gegenüber dem Elektrodenstapel 30 kann als eine dauerhafte Verstärkung bzw. Isolierung oder als eine temporäre Verstärkung bzw. Isolierung ausgeführt sein, bei welcher die entsprechende isolierende Wirkung und/oder verstärkende Wirkung im Falle eines thermischen Durchgehens aktiviert werden kann oder durch die Einwirkung von Wärme zunehmend nachlassen kann.

Ohne die beschriebenen Maßnahmen kann bei einem thermischen Durchgehen bei einer hochenergetischen Zellchemie beginnend am Rand der Berstöffnung 27 das Aluminium-Gehäuse aufschmelzen und nachfolgend das Innenvolumen V des Zellgehäuses 20 freilegen.

## Patentansprüche

1. Anordnung (10) zur thermischen Verstärkung eines Zellgehäuses (20) einer Batteriezelle (100), aufweisend ein Zellgehäuse (20) mit einem Innenvolumen (V) und aufweisend mindestens einen Elektrodenstapel (30), welcher in dem Innenvolumen (V) des Zellgehäuses (20) angeordnet ist, wobei das Zellgehäuse (20) zumindest bereichsweise thermisch verstärkt und/oder zumindest bereichsweise gegenüber dem Elektrodenstapel (30) isoliert ausgeführt ist.

2. Anordnung nach Anspruch 1, wobei das Zellgehäuse durch ein zumindest bereichsweise stoffschlüssig aufgebrachtes Material (13, 14) thermisch verstärkt ist, wobei das Material (13, 14) innenseitig und/oder außenseitig angeordnet ist.

3. Anordnung nach Anspruch 1 oder 2, wobei das Zellgehäuse (20) durch eine zumindest bereichsweise Verdickung (14) mindestens einer Wandung (25, 26) thermisch verstärkt ist.

4. Anordnung nach einem der Ansprüche 1 bis 3, wobei das Zellgehäuse (20) durch eine zumindest bereichsweise aufgebrachte Beschichtung (16) thermisch verstärkt ist, wobei die Beschichtung (16) innenseitig und/oder außenseitig auf zumindest einer Wandung (25, 26) des Zellgehäuses (20) aufgebracht ist.

5. Anordnung nach einem der Ansprüche 1 bis 4, wobei das Zellgehäuse (20) durch mindestens ein innenseitig und/oder außenseitig angeordnetes Verstärkungselement (11) thermisch verstärkt ist.

6. Anordnung nach Anspruch 5, wobei das Verstärkungselement (11) in Form eines Verstärkungseinsatzes ausgeführt ist, welcher in einer Berstöffnung (27) angeordnet ist oder eine Berstöffnung (27) randseitig begrenzt.

7. Anordnung nach Anspruch 5 oder 6, wobei das Verstärkungselement (11) durch eine Berstmembran (40) an dem Zellgehäuse (20) fixiert ist.

8. Anordnung nach einem der Ansprüche 1 bis 7, wobei der mindestens eine im Innenvolumen (V) des Zellgehäuses (20) angeordnete Elektrodenstapel (30) zumindest bereichsweise durch ein thermisch wirksames Element (31) umhüllt ist, wobei das thermisch wirksame Element (31) als eine thermisch isolierende Matte und/oder als eine thermisch isolierende Platte ausgestaltet ist, wobei das Zellgehäuse (20) zumindest bereichsweise durch die thermisch isolierende Matte und/oder thermisch isolierende Platte gegenüber dem Elektrodenstapel (30) isoliert ist.

9. Anordnung nach Anspruch 8, wobei die thermisch isolierende Matte als eine Keramikfasermatte ausgestaltet ist.

10. Anordnung nach Anspruch 8 oder 9, wobei das Zellgehäuse (20) mindestens eine Berstmembran (40) aufweist, wobei die thermisch isolierende Matte zwischen der Berstmembran und dem mindestens einen Elektrodenstapel angeordnet ist.

11. Anordnung nach einem der Ansprüche 1 bis 10, wobei zwischen mindestens einer Wandung (25, 26) des Zellgehäuses (20) und zwischen mindestens einem Elektrodenstapel (30) mindestens ein thermisch wirksames Element (31) angeordnet ist, wobei das thermisch wirksame Element (31) dazu eingerichtet ist, bei Wärmeeinwirkung eine Wärmemenge durch Schmelzung und/oder Verdampfung aufzunehmen und/oder einen isolierenden Spalt zwischen dem Elektrodenstapel (30) und dem Zellgehäuse (20) auszubilden.

12. Batteriezelle (100), aufweisend eine Anordnung (10) gemäß einem der vorhergehenden Ansprüche.
